# EUROPEAN PATENT SPECIFICATION

(11) **EP 2 984 566 B1**
(45) Date of publication and mention of the grant of the patent: **08.07.2020**
(21) Application number: 13728625.8
(22) Date of filing: 30.05.2013
(51) Int. Cl.: G06F 9/52, G06F 17/40, H04L 12/18, H04L 12/58

(54) **SYSTEM AND METHOD FOR EVENT CREATION**
SYSTEM UND VERFAHREN ZUR EREIGNISERZEUGUNG
SYSTÈME ET PROCÉDÉ DE CRÉATION D'ÉVÉNEMENT

(30) Priority: 29.06.2012 US 201213537803
(43) Date of publication of application: 17.02.2016
(73) Proprietor: Google LLC, Mountain View, CA 94043 (US)
(72) Inventor: LOPYREV, Anton, Mountain View, CA 94043 (US); EIDELSON, Benjamin, D., Mountain View, CA 94043 (US); PRADO, Jason, Mountain View, CA 94043 (US); HARSHAWAT, Kavi, Mountain View, CA 94043 (US)
(74) Representative: Betten & Resch
(86) International application number: PCT/US2013/043350
(87) International publication number: WO 2014/003959

(56) References cited:
- WO-A1-2011/138528
- US-A1- 2004 128 181
- US-A1- 2007 005 704
- US-A1- 2007 266 096
- US-A1- 2008 052 354
- US-A1- 2009 228 321

## Description

### Technical Field

This disclosure relates to online collaboration and, more particularly, to creating events.

### Background

The Internet currently allows for the free exchange of ideas and information in a manner that was unimaginable only a couple of decades ago. One such use for the Internet is as a communication medium, whether it is via one-on-one exchanges or multi-party exchanges. For example, two individuals may exchange private emails with each other. Alternatively, multiple people may participate on a public website in which they may post entries that are published for multiple people to read. Examples of such websites may include but are not limited to product / service review sites, social networks, and topical blogs.

US 2007/266096 A1, Daly Orla et al., 15.11.2007, discloses a method for operating a group messaging session, in which a user can trigger a postponement of the session.

WO 2011/138528 A1, Alcatel Lucent, 10.11.2011, discloses a method for launching a contextualized on-the-fly conference.

US 2008/052354 A1, Barber-Mingo Cynthia et al., 28.02.2008, discloses a method for distributing information to an invitee of an instant messaging meeting prior to the meeting.

### Summary of Disclosure

The invention is determined by a computer-implemented method as defined in independent claim 1 and a corresponding system as defined in claim 12. Further aspects are defined in the dependent claims 2 to 11. According to another implementation, a method may include receiving a request to schedule an event associated with a conversation within a group messaging system. The method may also include creating an event including the participants of the conversation. The method may also include receiving an event attribute from at least one of the participants of the conversation. The method may further include transmitting a notification of the event and the at least one event attribute to the conversation via the group messaging system.

According to another implementation, a method may include receiving an identification of a conversation including a plurality of conversation participants within a group messaging system. The method may also include receiving a request to schedule an event relative to the conversation. The method may also include creating an event having a plurality of event participants based on, at least in part, the plurality of conversation participants. The method may further include transmitting a notification of the event to the plurality of event participants.

One or more of the following features may be included. The method may further include receiving one or more event attributes from one or more of the plurality of event participants. The method may further include transmitting the one or more event attributes to the conversation. The one or more event attributes may include one or more of a time and a location. The method may further include receiving a changed event attribute from one or more event participants, and updating the one or more event attributes based on, at least in part, the changed event attribute.

Receiving the request to schedule the event may include receiving an indication of an existing event. Creating the event having a plurality of event participants based on, at least in part, the plurality of conversation participants may include updating the existing event to include the plurality of conversation participants as event participants.

The method may further include transmitting metadata associated with the event to the conversation. The metadata associated with the event may include one or more of and RSVP and an event check-in. The method may also include determining an event attribute based on one or more status characteristics of the plurality of event participants. The one or more status characteristics of the plurality of event participants may include one or more of a location of the plurality of event participants and an availability of the one or more event participants. The method may further include transmitting event updates to the conversation based on a changed event participant status.

In another implementation, a computing system includes at least one processor. The at least one processor may be configured to receive a request to schedule an event associated with a conversation in a group messaging system. The at least one processor may also be configured to create an event including a plurality of event participants based on, at least in part, a plurality of conversation participants. The at least one processor may also be configured to receive one or more event attributes from one or more of the plurality of event participants. The at least one processor may further be configured to transmit a notification of the event and the one or more event attributes to the plurality of event participants via the group messaging system.

One or more of the following features may be included. The one or more event attributes may include one or more of a time and a location. The at least one processor may be further configured to receive a changed event attribute from one or more event participants. The at least one processor may also be configured to update the one or more event attributes based on, at least in part, the changed event attribute. The at least one processor may be further configured to transmit the updated one or more event attributes to the conversation within the group messaging system.

The request to schedule the event may include an indication of an existing event, and the at least one processor may be configured to create the event by updating the existing event to include the plurality of conversation participants as event participants.

The at least one processor may be further configured to transmit metadata associated with the event to the conversation. The metadata associated with the event may include one or more of and RSVP and an event check-in. The at least one processor may be further configured to determine an event attribute based on one or more status characteristics of the plurality of event participants. The one or more status characteristics of the plurality of event participants may include one or more of a location of the plurality of event participants and an availability of the one or more event participants. The at least one processor may be further configured to transmit event updates to the conversation based on a changed event participant status.

The details of one or more implementations are set forth in the accompanying drawings and the description below. Other features and advantages will become apparent from the description, the drawings, and the claims.

### Brief Description of the Drawings

FIG. 1 is a diagrammatic view of a distributed computing network including a computing device that executes an event process according to an embodiment of the present disclosure;
FIG. 2 is a flowchart of the event process of FIG. 1, according to an embodiment of the present disclosure;
FIG. 3 is diagrammatic representation of a user interface provided by, at least in part, by the event process of FIG. 1, according to an embodiment of the present disclosure;
FIG. 4 is diagrammatic representation of a user interface provided by, at least in part, by the event process of FIG. 1, according to an embodiment of the present disclosure;
FIG. 5 is diagrammatic representation of a user interface provided by, at least in part, by the event process of FIG. 1, according to an embodiment of the present disclosure;
FIG. 6 is diagrammatic representation of a user interface provided by, at least in part, by the event process of FIG. 1, according to an embodiment of the present disclosure;
FIG. 7 is diagrammatic representation of a user interface provided by, at least in part, by the event process of FIG. 1, according to an embodiment of the present disclosure;
FIG. 8 is diagrammatic representation of a user interface provided by, at least in part, by the event process of FIG. 1, according to an embodiment of the present disclosure;
FIG. 9 is diagrammatic representation of a user interface provided by, at least in part, by the event process of FIG. 1, according to an embodiment of the present disclosure;
FIG. 10 is a diagrammatic view of the computing device of FIG. 1, according to an embodiment of the present disclosure.

Like reference symbols in the various drawings indicate like elements.

### Detailed Description of Example Embodiments

According to some example embodiments consistent with the present disclosure, events may be scheduled through a group messaging system. The group messaging system may generally include a messaging system that utilizes participant-threaded messaging, in which messages make up a conversation based on common participants. In some embodiments, scheduling events through the group messaging system may simplify scheduling, e.g., of ad hoc events. For example, the number of steps required for creating an event may be reduced by utilizing the participants of the conversation to pre-populate a guest list for the event. Further, a group dynamic flowing from the conversation may be utilized for determining various attributes of the event.

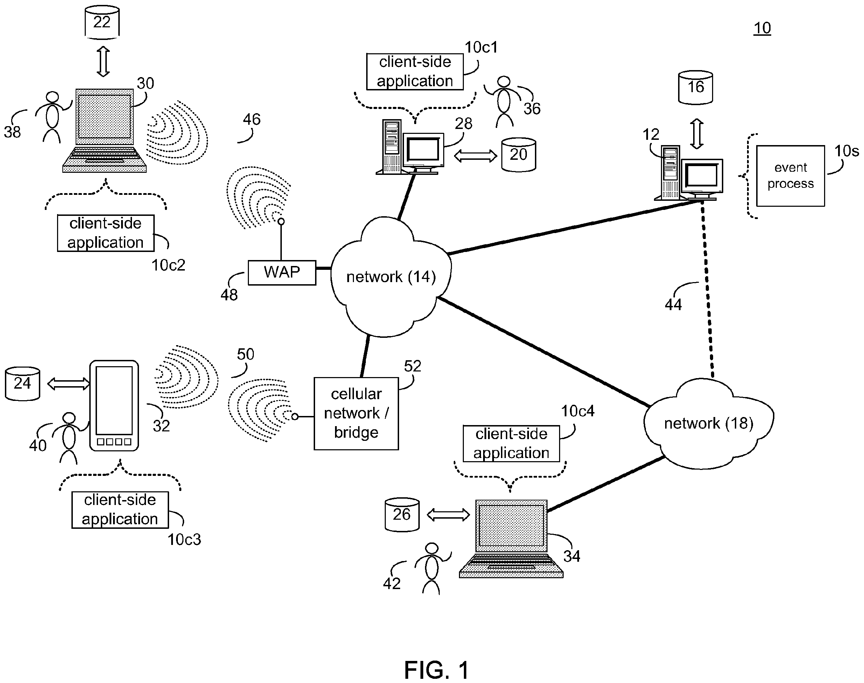

Referring to FIG. 1, there is shown event process 10. For the following discussion, it is intended to be understood that event process 10 may be implemented in a variety of ways. For example, event process 10 may be implemented as a server-side process, a client-side process, or a server-side / client-side process.

For example, event process 10 may be implemented as a purely server-side process via event process 10s. Alternatively, event process 10 may be implemented as a purely client-side process via one or more of client-side application 10c1, client-side application 10c2, client-side application 10c3, and client-side application 10c4. Alternatively still, event process 10 may be implemented as a server-side / client-side process via event process 10s in combination with one or more of client-side application 10c1, client-side application 10c2, client-side application 10c3, and client-side application 10c4. In such an example, at least a portion of the functionality of event process 10 may be performed by event process 10s and at least a portion of the functionality of event process 10 may be performed by one or more of client-side application 10c1, 10c2, 10c3, and 10c3.

Accordingly, event process 10 as used in this disclosure may include any combination of event process 10s, client-side application 10c1, client-side application 10c2, client-side application 10c3, and client-side application 10c4.

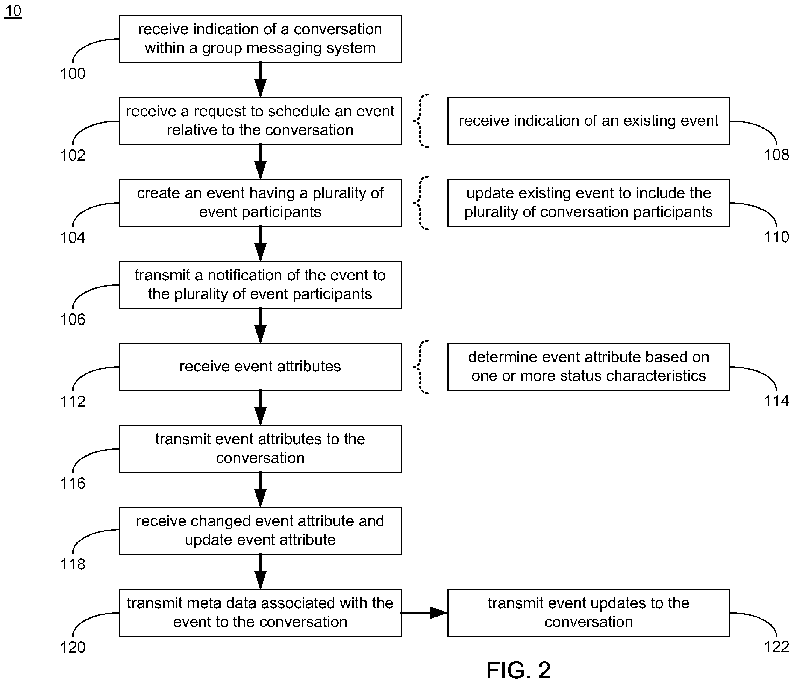

Referring also to FIG. 2 and as will be discussed below in greater detail, event process 10 may receive 100 an identification of a conversation including a plurality of conversation participants within a group messaging system. Event process 10 may also receive 102 a request to schedule an event relative to the conversation. Event process 10 may also create 104 an event having a plurality of event participants based on, at least in part, the plurality of conversation participants. Event process 10 may further transmit 106 a notification of the event to the plurality of event participants.

Event process 10s may be a server application and may reside on and may be executed by computing device 12, which may be connected to network 14 (e.g., the Internet or a local area network). Examples of computing device 12 may include, but are not limited to: a personal computer, a server computer, a series of server computers, a mini computer, a mainframe computer, or a dedicated network device.

The instruction sets and subroutines of event process 10s, which may be stored on storage device 16 coupled to computing device 12, may be executed by one or more processors (not shown) and one or more memory architectures (not shown) included within computing device 12. Examples of storage device 16 may include but are not limited to: a hard disk drive; a tape drive; an optical drive; a RAID device; an NAS device, a Storage Area Network, a random access memory (RAM); a read-only memory (ROM); and all forms of flash memory storage devices.

Network 14 may be connected to one or more secondary networks (e.g., network 18), examples of which may include but are not limited to: a local area network; a wide area network; or an intranet, for example.

Examples of client-side applications 10c1, 10c2, 10c3, 10c4 may include but are not limited to a web browser, a game console user interface, a television user interface, or a specialized application (e.g., an application running on a mobile platform). The instruction sets and subroutines of client-side application 10c1, 10c2, 10c3, 10c4, which may be stored on storage devices 20, 22, 24, 26 (respectively) coupled to client electronic devices 28, 30, 32, 34 (respectively), may be executed by one or more processors (not shown) and one or more memory architectures (not shown) incorporated into client electronic devices 28, 30, 32, 34 (respectively). Examples of storage devices 20, 22, 24, 26 may include but are not limited to: hard disk drives; tape drives; optical drives; RAID devices; random access memories (RAM); read-only memories (ROM), and all forms of flash memory storage devices.

Examples of client electronic devices 28, 30, 32, 34 may include, but are not limited to, personal computer 28, laptop computer 30, mobile computing device 32, notebook computer 34, a netbook computer (not shown), a server computer (not shown), a gaming console (not shown), a data-enabled television console (not shown), and a dedicated network device (not shown). Client electronic devices 28, 30, 32, 34 may each execute an operating system.

Users 36, 38, 40, 42 may access event process 10 directly through network 14 or through secondary network 18. Further, event process 10 may be accessed through secondary network 18 via link line 44.

The various client electronic devices (e.g., client electronic devices 28, 30, 32, 34) may be directly or indirectly coupled to network 14 (or network 18). For example, personal computer 28 is shown directly coupled to network 14. Further, laptop computer 30 is shown wirelessly coupled to network 14 via wireless communication channels 46 established between laptop computer 30 and wireless access point (WAP) 48. Similarly, mobile computing device 32 is shown wirelessly coupled to network 14 via wireless communication channel 50 established between mobile computing device 32 and cellular network / bridge 52, which is shown directly coupled to network 14. WAP 48 may be, for example, an IEEE 802.11a, 802.11b, 802.11g, 802.11n, Wi-Fi, and/or Bluetooth device that is capable of establishing wireless communication channel 46 between laptop computer 30 and WAP 48. Additionally, personal computer 34 is shown directly coupled to network 18 via a hardwired network connection.

As generally discussed above, event process 10 may generally allow events to be created, scheduled, and/or managed in connection with group messaging systems. For example, in an embodiment, event process 10 may receive 100 an identification of a conversation including a plurality of conversation participants within a group messaging system. The group messaging system may generally allow for messaging communications between two or more people. Group messaging system may utilize a communication channel that may include participant-based message threads. As such, conversations within the group messaging system may include a common group of participants (i.e., a plurality of conversation participants) regardless of topic or subject of the message. In some embodiments, the group messaging system may utilize interruptive messaging, e.g., in which an interruptive notification of a new message may be utilized. As such, exchanges within a conversation may be capable of being carried out in a generally synchronous manner. Examples of group messaging systems may include, but are not limited to, SMS messaging systems, instant messaging systems, social network-based messaging systems, and the like.

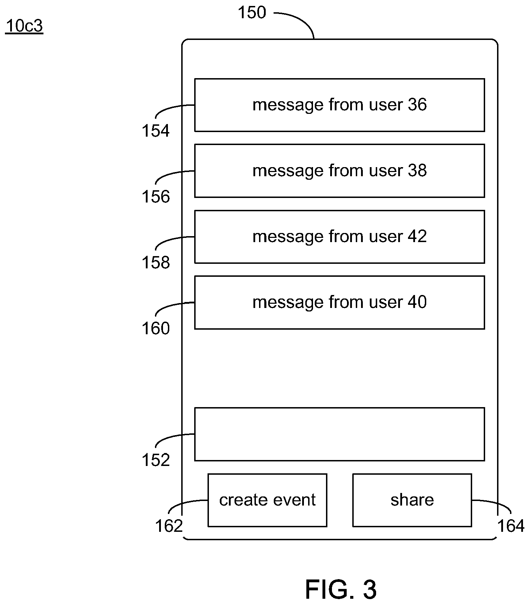

According to an example embodiment, and referring also to FIG. 3, event process 10 may receive 100 an identification of a conversation within a group messaging system, e.g., in response to a user (e.g., user 40) accessing user interface 150 (e.g., which may be provided at least in part by one or more of client-side application 10c3 executed by mobile computing device 32 and/or event process 10s) associated with a conversation. While user interface 150 is shown as a user interface through which the user may create messages (e.g., via text input field 152) for the conversation and/or read messages that have been received relative to the conversation (e.g., messages 154, 156, 158, from other participants of the conversation and/or message 160 that may have been generated by user 40). In some embodiments, receiving 100 the identification of the conversation may include receiving an identification of the plurality of conversation participants associated with the conversation (e.g., user 36, user 38, user 40, user 42, in the illustrated embodiment). Various additional / alternative mechanisms may similarly be utilized for selecting a conversation within the group messaging system. Further, is will be appreciated that the various example user interfaces shown and described are intended only for the purpose of explanation, and should not be construed as limiting the scope of the present disclosure as various different user interfaces may be equally utilized. Event process 10 may receive 100 an identification of the conversation in response to the selection of the conversation by the user.

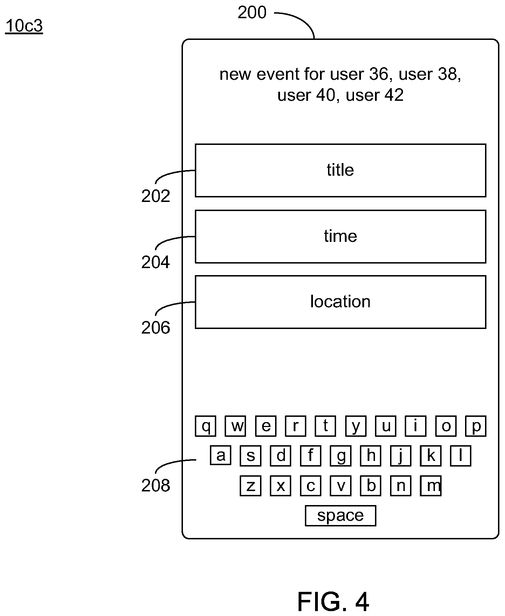

Event process 10 may also receive 102 a request to schedule an event relative to the conversation. For example, and referring still to FIG. 3, user 40 may select (e.g., via a touch screen input device, or other suitable input device) create event button 162 from within user interface 150. In response to user 40 selecting create event button 160, event process 10 may receive 102 a request to schedule an event relative to the conversation. In response to receiving 102 the request to schedule an event relative to the conversation, event process 10 may create 104 an event having a plurality of event participants based on, at least in part, the plurality of conversation participants. For example, event process 10 may create 104 an event having the guest list pre-populated with the members of the conversation. With reference also to FIG. 4, in an example embodiment, as part of creating 104 the event, event process 10 (alone and/or in conjunction with one or more additional applications, such as client-side application 10c3 and/or a separate scheduling application) may provide event details user interface 200. In an example embodiment, event details user interface 200 may allow user 40 to provide one or more event attributes via corresponding fields. For example, user 40 may provide a title for the event in title input field 202, a proposed time for the event in time input field 204, and a proposed location for the event via location input field 206. Event attributes may be input, for example, using virtual keyboard 208 provided by client-side application 10c3 and/or another application. In some embodiments, it may only be necessary for user 40 (e.g., the creator of the event) to provide a title for the event. In such an embodiment, other event attributes may be provided at a later time and/or not provided for the event. Consistent with the foregoing example, event process 10 may allow events, including ad hoc events, to be relatively quickly and easily created.

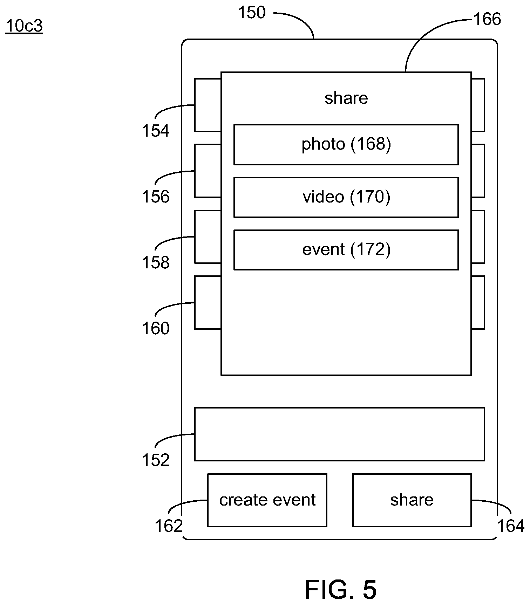

In another embodiment, in addition / as an alternative to creating a new event, user 40 may share an existing event with the conversation (i.e., may share the existing event with the conversation participants). Consistent with such an embodiment, event process may receive 102 the request to schedule an event including receiving 108 an indication of an existing event. For example, and with reference again to FIG. 3, rather than selecting create event button 162, user 40 may select share button 164. Referring also to FIG. 5, in response to receiving a selection of share button 164, client-side application 10c3 (alone and/or in combination with event process 10 and/or another application) may provide sharing user interface 166. Sharing user interface 166 may include various options of content and/or objects to be shared with the conversation (i.e., to be shared with the conversation participants via the group messaging system). For example, sharing user interface may include photo sharing option 168, video sharing option 170, and event sharing option 172. Sharing user interface 166 may include various additional and/or alternative options of content and/or objects to be shared with the conversation.

While not shown, in response to user 40 selecting event sharing option 172, client-side application 10c3 (alone and/or in conjunction with event process 10 and/or another application) may provide a listing of all of the up-coming events for which user is a participants (i.e., events to which user 40 has been invited). User 40 may select an event to be shared with the conversation from within the list of the up-coming events. In response to user 40 selecting an event from within the list of up-coming events, event process 10 may receive 108 an indication of the existing event. Consistent with such an embodiment, in response to receiving 108 the indication of the existing event, event process 10 may create 104 the event having a plurality of event participants based on, at least in part, the plurality of conversation participants by updating 110 the existing event to include the plurality of conversation participants as event participants. That is, event process 10 (alone and/or in conjunction with another application, such as a separate scheduling application and/or a scheduling module within the group messaging system, etc.) may update the existing event to expand the participants list (i.e., the list of individuals invited to participate in the event) to include the conversation participants.

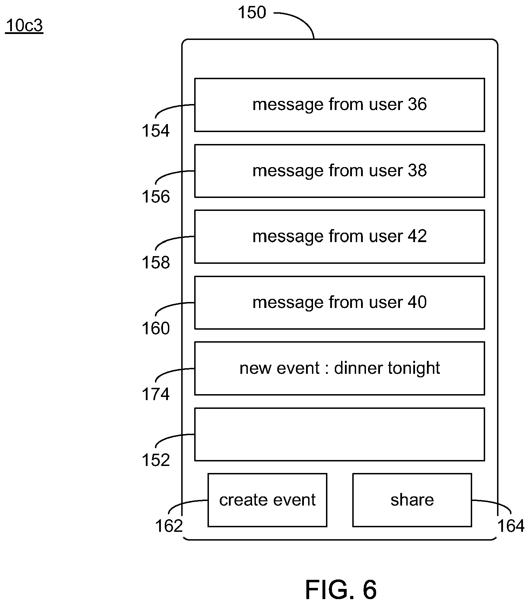

Event process 10 may transmit 106 a notification of the event to the plurality of event participants. In an example embodiment, transmitting 106 a notification of the event to the plurality of event participants may include transmitting a notification of the event to the conversation (i.e., to the conversation participants via the group messaging system). For example, and referring also to FIG. 6, in an embodiment event process 10 may transmit 106 the notification of the event to the conversation in the form of a new message (e.g., new event message 174 "new event : dinner tonight") within the conversation user interface 150. In some embodiments, in which the group messaging system may utilize interruptive messaging, transmission 106 of the notification (e.g., new event message 174) may also invoke an interruptive notification at respective client applications associated with conversation participants.

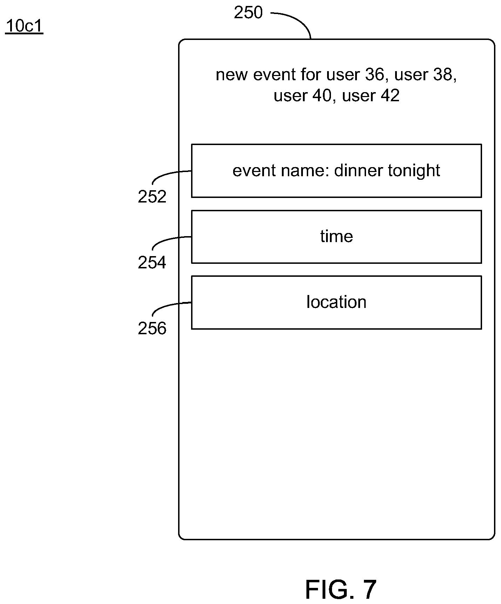

In an example embodiment, event process 10 may further receive 112 one or more event attributes from one or more of the plurality of event participants. For example, and as described above, in some embodiments the user creating the event (e.g., user 40 in the preceding example) may provide one or more event attributes during creation of the event (e.g., as described with respect to FIG. 4). In some embodiments, event process 10 may facilitate the event attributes being provided as a function of the group dynamic of the conversation. For example, event process 10 may, in some embodiments, allow the various event participants (who may also be conversation participants) to add and/or change event attributes, e.g., in a generally democratic manner. For example, and referring also to FIG. 7, another user (e.g., user 36 for the purpose of explanation) may provide one or more event attributes, e.g., by selecting the notification of the event from within a conversation user interface (e.g., which may generally correspond to user interface 150 shown in FIG. 6). In response to selecting the event from within a conversation user interface, client-side application 10c1 (alone and/or in conjunction with event process 10 and/or one or more additional application) may provide event user interface 250. As shown, in an example embodiment, user interface 250 may include one or more event attribute fields (e.g., event name field 252, event time field 254, event location 256). Various additional / alternative event attribute fields may similarly be included. Via event user interface 250, user 36 may input (e.g., using a suitable input device, such as a keyboard associated with personal computer 28). Event process 10 may receive 112 the one or more event attributes in response to user 36 inputting one or more event attributes via event user interface 250. As shown, the one or more event attributes may include one or more of a time and a location. Various additional / alternative event attributes may equally be utilized.

In an embodiment, event process 10 may determine 114 an event attributed based on one or more status characteristics of the plurality of event participants. In an example embodiment, the one or more status characteristics of the plurality of event participants may include one or more of a location of the plurality of event participants and an availability of the one or more event participants. For example, event process 10 (alone and/or in conjunction with one or more additional applications, such as client-side applications 10c1, 10c2, 10c3, 10c4, a separate scheduling application associated with one or more event processors, a scheduling module associated with the group messaging system, etc.) may determine an available time associated with the plurality of event participants. For example, based on, at least in part, other scheduled events for each of the event participants, event process 10 may determine 114 that each of the event participants may be available at 7:00 PM. In response to determining 114 that each of the event participants may be available at 7:00 PM, event process 10 may set a time attribute associated with the event to be 7:00 PM. In a further embodiment, the one or more event participants may provide (e.g., in response to a request for availability from event process 10) times at which they may be available.

In another example embodiment, event process 10 may determine 114 an event location attribute based on, at least in part, an determined location of one or more event participants and/or an anticipated location of the one or more event participants. For example, in an embodiment event process 10 may determine a location associated with one or more of the event participants based on a request for location transmitted to one or more of the event participants. In a further embodiment, one or more of the client electronic devices associated with one or more of the event participants may transmit a location of the client electronic device (e.g., based on a GPS determined location, a hardwired determined location, cell tower triangulation, and or another mechanism by which a location of the client electronic device may be determined) to event process 10. In an example embodiment, based on received locations associated with one or more of the event participants (e.g., either directly and/or by inference based on the location of a client electronic device associated with one or more of the event participants), event process 10 may determine 114 an event location attribute, e.g., based on a location that may be generally central to at least a majority of the one or more event participants. Event process 10 may determine 114 various additional / alternative event attributes associated with the event in generally similar manners.

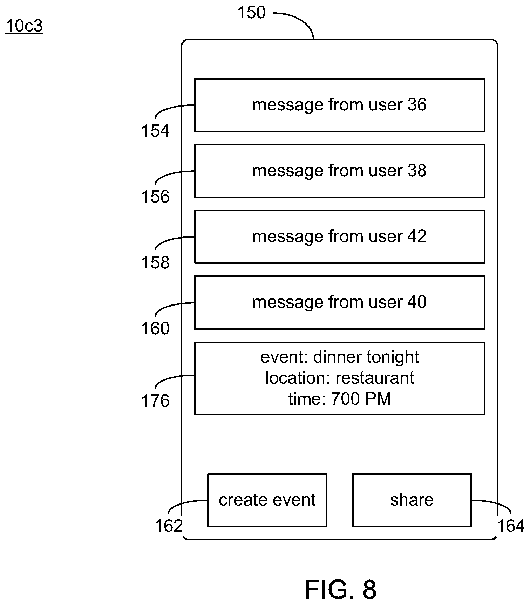

In an embodiment, event process 10 may transmit 116 the one or more event attributes to the conversation. For example, once one or more event attributes have been defined by one or more of the event participants, a notification of the event including the received 112 and/or determined 114 event attributes may be transmitted to the conversation (i.e., to the conversation participants via the group messaging system). For example, assume that an event participant (e.g.., user 36) may have provided an event location (e.g., restaurant) for the "dinner tonight" event. Further, assume that event process 10 may have determined 114 a time (e.g., 7:00 PM) for the event. Accordingly, event process 10 may transmit 116 the one or more event attributes to the conversation, e.g., as a notification including event details. For example, and referring also to FIG. 8, in an embodiment, event process 10 may transmit 116 the one or more event attributes to the conversation as event message 176 that may be received by one or more conversation participants via a group messaging interface (e.g., user interface 150).

According to an example embodiment, event process 10 may facilitate the creation and modification of events based on a group dynamic amongst conversation participants. I such an example embodiment, event process 10 may receive 118 a changed event attribute from one or more event participants, and may update the one or more event attributes based on, at least in part, the changed event attribute. For example, and as generally discussed with respect to FIG. 7, one or more of the event participants may input an event attribute associated with the event (e.g., via a suitable user interface). In some embodiments, even once an attribute has been input, another event participant may change and/or modify an event attribute that has been received 112 by event process 10. In response to receiving 118 a changed event attribute (e.g., as a result of an event participant changing an already established event attribute and/or providing a previously undefined event attribute), event process 10 may update the changed event attribute to include the newly received 118 information. In some embodiments, event process 10 may further transmit a notification of the updated event attribute to the conversation, e.g., in a manner similar to transmitting 116 the one or more event attributes to the conversation discussed with respect to FIG. 8. In some embodiments, access controls may be implemented, e.g., to prevent modification of event attributes, and/or to define which event participants may have the privilege to modify event attributes.

In some embodiments, event process 10 may further transmit 120 metadata associated with the event to the conversation. According to various embodiments, the metadata associated with the event may include, for example, an RSVP to the event, a check-in (e.g., signifying that an event participant may have arrived at the location of the event), and/or various additional / alternative metadata. Event process 10 may transmit 120 the metadata associated with the event to the conversation (e.g., to event participants via the group messaging system), for example, as a message within the conversation and/or via other suitable mechanism.

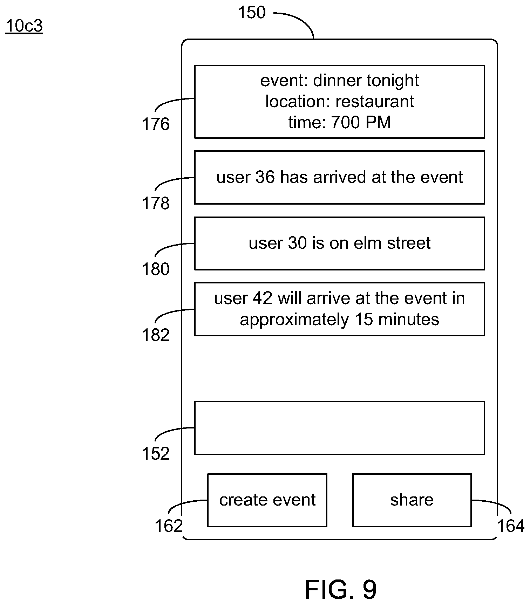

In some embodiments, event process 10 may transmit 122 event update to the conversation based on, at least in part, a changed event participant status. Event participant status may include, but is not limited to, for example an event participant's location, an event participant's arrival at the event, and estimated time of arrival for an event participant at the event, and the like. In an example embodiment, event process 10 may transmit 122 event updates to the conversation which may be accessed by a conversation participant via a group messaging interface. For example, and referring to FIG. 9, user 40 may receive event updates transmitted 122 by event process as update messages (e.g., update message 178, 180, 182) within group messaging user interface 150. Various additional and/or alternative updates may similarly be transmitted and/or received using other suitable mechanisms.

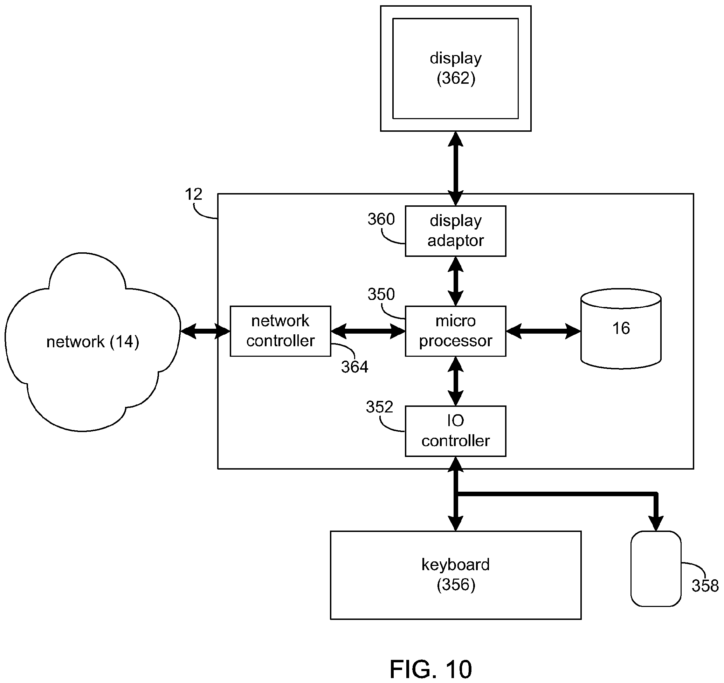

Referring also to FIG. 10, there is shown a diagrammatic view of computing system 12. While computing system 12 is shown in this figure, this is for illustrative purposes only and is not intended to be a limitation of this disclosure, as other configuration are possible. For example, any computing device capable of executing, in whole or in part, event process 10 may be substituted for computing device 12 within FIG. 4, examples of which may include but are not limited to client electronic devices 28, 30, 32, 34.

Computing system 12 may include microprocessor 350 configured to e.g., process data and execute instructions / code for event process 10. Microprocessor 350 may be coupled to storage device 16. As discussed above, examples of storage device 16 may include but are not limited to: a hard disk drive; a tape drive; an optical drive; a RAID device; an NAS device, a Storage Area Network, a random access memory (RAM); a read-only memory (ROM); and all forms of flash memory storage devices. IO controller 352 may be configured to couple microprocessor 350 with various devices, such as keyboard 354, mouse 356, USB ports (not shown), and printer ports (not shown). Display adaptor 360 may be configured to couple display 362 (e.g., a CRT or LCD monitor) with microprocessor 350, while network adapter 364 (e.g., an Ethernet adapter) may be configured to couple microprocessor 350 to network 14 (e.g., the Internet or a local area network).

As will be appreciated by one skilled in the art, the present disclosure may be embodied as a method (e.g., executing in whole or in part on computing device 12), a system (e.g., computing device 12), or a computer program product (e.g., encoded within storage device 16). Accordingly, the present disclosure may take the form of an entirely hardware embodiment, an entirely software embodiment (including firmware, resident software, microcode, etc.) or an embodiment combining software and hardware aspects that may all generally be referred to herein as a "circuit," "module" or "system." Furthermore, the present disclosure may take the form of a computer program product on a computer-usable storage medium (e.g., storage device 16) having computer-usable program code embodied in the medium.

Any suitable computer usable or computer readable medium (e.g., storage device 16) may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium may include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. The computer-usable or computer-readable medium may also be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to the Internet, wireline, optical fiber cable, RF, etc.

Computer program code for carrying out operations of the present disclosure may be written in an object oriented programming language such as Java, Smalltalk, C++ or the like. However, the computer program code for carrying out operations of the present disclosure may also be written in conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through a local area network / a wide area network / the Internet (e.g., network 14).

The present disclosure is described with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, may be implemented by computer program instructions. These computer program instructions may be provided to a processor (e.g., processor 350) of a general purpose computer / special purpose computer / other programmable data processing apparatus (e.g., computing device 12), such that the instructions, which execute via the processor (e.g., processor 350) of the computer or other programmable data processing apparatus, create means for implementing the functions/acts specified in the flowchart and/or block diagram block or blocks.

These computer program instructions may also be stored in a computer-readable memory (e.g., storage device 16) that may direct a computer (e.g., computing device 12) or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer (e.g., computing device 12) or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The flowcharts and block diagrams in the figures may illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, may be implemented by special purpose hardware-based systems that perform the specified functions or acts, or combinations of special purpose hardware and computer instructions.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. The embodiment was chosen and described in order to best explain the principles of the disclosure and the practical application, and to enable others of ordinary skill in the art to understand the disclosure for various embodiments with various modifications as are suited to the particular use contemplated.

Having thus described the disclosure of the present application in detail and by reference to embodiments thereof, it will be apparent that modifications and variations are possible without departing from the scope of the disclosure defined in the appended claims.

## Claims

1. A computer-implemented method comprising:
receiving (100), on a computing device, an identification of a conversation including a plurality of conversation participants within a group messaging system;
receiving (102), on the computing device, a request to schedule an event relative to the conversation;
creating (104), on the computing device, the event having a plurality of event participants based on, at least in part, the plurality of conversation participants;
transmitting (106), on the computing device, a notification of the event to the plurality of event participants; and
obtaining one or more event attributes, the obtaining includes:
receiving (112) a first set of event attributes from one or more of the plurality of event participants, said first set of event attributes comprising a location of each of said plurality of event participants; and
determining (114) a second set of event attributes, on the computing device, including determining an event location attribute specifying a location of the event that is generally central to at least a majority of the one or more event participants.

2. The computer-implemented method of claim 1, further comprising transmitting (116) the one or more event attributes to the conversation.

3. The computer-implemented method of claim 1, wherein the one or more event attributes include a time attribute.

4. The computer-implemented method of claim 1, further comprising receiving (118) a changed event attribute from one or more event participants; and
updating the one or more event attributes based on, at least in part, the changed event attribute.

5. The computer-implemented method of claim 1, wherein receiving the request to schedule the event includes receiving (108) an indication of an existing event.

6. The computer-implemented method of claim 5, wherein creating the event having a plurality of event participants based on, at least in part, the plurality of conversation participants includes updating (110) the existing event to include the plurality of conversation participants as event participants.

7. The computer-implemented method of claim 1, further comprising transmitting metadata associated with the event to the conversation.

8. The computer-implemented method of claim 7, wherein the metadata associated with the event includes one or more of an RSVP and an event check-in.

9. The computer-implemented method of claim 1, further comprising determining (114) an event attribute based on one or more status characteristics of the plurality of event participants.

10. The computer-implemented method of claim 9, wherein the one or more status characteristics of the plurality of event participants include one or more of a location of the plurality of event participants and an availability of the one or more event participants.

11. The computer-implemented method of claim 1, further comprising transmitting (122) event updates to the conversation based on a changed event participant status.

12. A computing system comprising at least one processor, the at least one processor configured to implement all the steps of a method according to any one of the preceding claims.

## Patentansprüche

1. Ein computer-implementiertes Verfahren, aufweisend::
Empfangen (100) einer Identifikation einer Konversation, die eine Vielzahl von Konversationsteilnehmern innerhalb eines Gruppennachrichtensystems enthält, auf einer Computervorrichtung;
Empfangen (102), auf der Computervorrichtung, einer Anforderung, ein Ereignis relativ zu der Konversation zu planen;
Erzeugen (104) des Ereignisses mit einer Vielzahl von Ereignisteilnehmern auf der Computervorrichtung auf der Grundlage zumindest teilweise der Vielzahl von Gesprächsteilnehmern;
Übertragen (106) einer Benachrichtigung über das Ereignis an die Vielzahl von Ereignisteilnehmern auf der Computervorrichtung; und
die Einholung eines oder mehrerer Ereignisattribute, wobei die Einholung umfasst:
Empfangen (112) eines ersten Satzes von Ereignisattributen von einem oder mehreren aus der Vielzahl von Ereignisteilnehmern, wobei der erste Satz von Ereignisattributen einen Ort jedes aus der Vielzahl von Ereignisteilnehmern umfasst; und
Bestimmung (114) eines zweiten Satzes von Ereignisattributen auf der Computervorrichtung, einschließlich der Bestimmung eines Ereignisortattributs, das einen Ort des Ereignisses angibt, der im Allgemeinen für mindestens eine Mehrheit der einen oder mehreren Ereignisteilnehmer zentral ist.

2. Das computerimplementierte Verfahren nach Anspruch 1, welches ferner die Übertragung (116) der einen oder mehreren Ereignisattribute an die Konversation umfasst.

3. Das computer-implementierte Verfahren nach Anspruch 1, wobei das eine oder die mehreren Ereignisattribute ein Zeitattribut enthalten.

4. Das computerimplementierte Verfahren nach Anspruch 1, ferner aufweisend das Empfangen (118) eines geänderten Ereignisattributs von einem oder mehreren Ereignisteilnehmern; und
Aktualisierung eines oder mehrerer Ereignisattribute auf der Grundlage des geänderten Ereignisattributs, zumindest teilweise.

5. Das computerimplementierte Verfahren nach Anspruch 1, wobei der Empfang der Anfrage zur Planung des Ereignisses den Empfang (108) eines Hinweises auf ein existierendes Ereignis einschließt.

6. Computerimplementiertes Verfahren nach Anspruch 5, wobei das Erzeugen des Ereignisses mit einer Vielzahl von Ereignisteilnehmern, das zumindest teilweise auf der Vielzahl von Gesprächsteilnehmern basiert, das Aktualisieren (110) des existierenden Ereignisses einschließt, um die Vielzahl von Gesprächsteilnehmern als Ereignisteilnehmer einzuschließen.

7. Das computerimplementierte Verfahren nach Anspruch 1 umfasst ferner die Übertragung von dem Ereignis zugeordneten Metadaten an die Konversation.

8. Das computerimplementierte Verfahren nach Anspruch 7, wobei die dem Ereignis zugeordneten Metadaten eine oder mehrere RSVP und einen Ereignis-Check-in umfassen.

9. Das computerimplementierte Verfahren nach Anspruch 1, ferner umfassend das Bestimmen (114) eines Ereignisattributs, das auf einem oder mehreren Statusmerkmalen der Mehrzahl von Ereignisteilnehmern basiert.

10. Das computerimplementierte Verfahren nach Anspruch 9, wobei das eine oder die mehreren Statusmerkmale der Vielzahl von Ereignisteilnehmern eines oder mehrere von einem Ort der Vielzahl von Ereignisteilnehmern und einer Verfügbarkeit des einen oder der mehreren Ereignisteilnehmer einschließen.

11. Das computerimplementierte Verfahren nach Anspruch 1, ferner umfassend das Übertragen (122) von Ereignisaktualisierungen an die Konversation auf der Grundlage eines geänderten Ereignisteilnehmerstatus.

12. Computersystem mit mindestens einem Prozessor, wobei der mindestens eine Prozessor so konfiguriert ist, dass er alle Schritte eines Verfahrens gemäß einem der vorhergehenden Ansprüche implementiert.

## Revendications

1. Un procédé mis en œuvre par ordinateur comprenant :
le fait (100) de recevoir, sur un dispositif informatique, une identification d'une conversation comprenant une pluralité de participants à la conversation au sein d'un système de messagerie de groupe ;
le fait (102) de recevoir, sur le dispositif informatique, une demande de programmation d'un événement relatif à la conversation ;
le fait (104) de créer, sur le dispositif informatique, l'événement comportant une pluralité de participants à l'événement sur la base, au moins en partie, de la pluralité de participants à la conversation ;
le fait (106) de transmettre, sur le dispositif informatique, une notification de l'événement à la pluralité de participants à l'événement ; et
le fait d'obtenir un ou plusieurs attributs de l'événement, ce fait d'obtenir comprend :
le fait (112) de recevoir un premier ensemble d'attributs d'événement de la part d'un ou de plusieurs participants à l'événement, ledit premier ensemble d'attributs d'événement comprenant un emplacement de chaque participant faisant partie de ladite pluralité de participants à l'événement ; et
le fait (114) de déterminer une deuxième série d'attributs d'événement sur le dispositif informatique, incluant le fait de déterminer un attribut de lieu d'événement spécifiant un lieu de l'événement qui est généralement central pour au moins une majorité desdits un ou plusieurs participants à l'événement.

2. Le procédé mis en œuvre par ordinateur selon la revendication 1, comprenant en outre le fait (116) de transmettre lesdits un ou plusieurs attributs d'événement à la conversation.

3. Le procédé mis en œuvre par ordinateur selon la revendication 1, dans lequel lesdits un ou plusieurs attributs d'événement comprennent un attribut de temps.

4. Le procédé mis en œuvre par ordinateur selon la revendication 1, comprenant en outre le fait (118) de recevoir un attribut d'événement modifié en provenance d'un ou de plusieurs participants à l'événement ; et
le fait de mettre à jour lesdits un ou plusieurs attributs d'événement en fonction, au moins en partie, de l'attribut d'événement modifié.

5. Le procédé mis en œuvre par ordinateur selon la revendication 1, dans lequel la réception de la demande de programmation de l'événement inclut le fait (108) de recevoir une indication d'un événement existant.

6. Le procédé mis en œuvre par ordinateur selon la revendication 5, dans lequel la création de l'événement ayant une pluralité de participants à l'événement basée, au moins en partie, sur la pluralité de participants à la conversation inclut le fait (110) de mettre à jour l'événement existant pour inclure la pluralité de participants à la conversation en tant que participants à l'événement.

7. Le procédé mis en œuvre par ordinateur selon la revendication 1, comprenant en outre le fait de transmettre à la conversation des métadonnées associées à l'événement.

8. Le procédé mis en œuvre par ordinateur selon la revendication 7, dans lequel les métadonnées associées à l'événement comprennent un ou plusieurs de ce qui suit : un RSVP et un enregistrement à l'événement.

9. Le procédé mis en œuvre par ordinateur selon la revendication 1, comprenant en outre le fait (114) de déterminer un attribut d'événement basé sur une ou plusieurs caractéristiques de statut de la pluralité de participants à l'événement.

10. Le procédé mis en œuvre par ordinateur selon la revendication 9, dans lequel lesdites une ou plusieurs caractéristiques de statut de la pluralité de participants à l'événement comprennent un ou plusieurs parmi : un emplacement de la pluralité de participants à l'événement et une disponibilité desdits un ou plusieurs participants à l'événement.

11. Le procédé mis en œuvre par ordinateur selon la revendication 1, comprenant en outre le fait (122) de transmettre des mises à jour d'événements à la conversation sur la base d'un changement de statut d'un participant à l'événement.

12. Un système informatique comprenant au moins un processeur, ledit au moins un processeur étant configuré pour mettre en œuvre toutes les étapes d'un procédé selon l'une quelconque des revendications précédentes.
